# EUROPEAN PATENT APPLICATION

(11) **EP 4 822 532 A1**
(43) Date of publication of application: **14.10.2026**
(21) Application number: 26170847.3
(22) Date of filing: 07.04.2026
(51) Int. Cl.: G06F 9/50, G06F 9/54, H04L 47/125

(54) **API FOR MULTI-NIC LOAD BALANCING**

(30) Priority: 07.04.2025 US 202519171390; 26.06.2025 US 202519250122
(71) Applicant: Mellanox Technologies, Ltd., 2069200 Yokneam (IL)
(72) Inventor: BLOCH, Gil, 2069200 Yokneam (IL); DI GIROLAMO, Salvatore, 2069200 Yokneam (IL); GOOTZEN, Petrus, 2069200 Yokneam (IL); NUDELMAN, Roman, 2069200 Yokneam (IL)
(74) Representative: Mathys & Squire

(57) **Abstract**

In one embodiment, a processor comprises circuitry to implement an application programming interface (API) to manage processing of at least one traffic flow across a plurality of network devices coupled to at least one processing element generating the at least one traffic flow, and a memory to store data used by the API associated with managing the processing of the at least one traffic flow.

## Description

### RELATED APPLICATION INFORMATION

The present application claims priority of US Patent Application S/N 19/171,390 of Bloch, et al., filed 7 April 2025, the disclosure of which is hereby incorporated herein by reference.

### FIELD OF THE DISCLOSURE

The present disclosure relates to computing systems, and more particularly but not exclusively to load balancing for multiple NICs.

### BACKGROUND

Modern high-performance computing systems, data centers, and network infrastructure often employ multiple network interface controllers (NICs) per node to handle increasing network traffic demands. These multi-NIC configurations are designed to provide higher aggregate bandwidth, improved fault tolerance, and the ability to handle multiple simultaneous network connections.

In a typical multi-NIC system, one or more processing elements (e.g., CPUs, GPUs) are connected to multiple NICs through a system interconnect such as PCIe. These processing elements generate multiple traffic flows, where each flow represents a stream of data to be transmitted over the network. Traditionally, each NIC would handle separate flows independently, or flows would be statically assigned to specific NICs.

The aggregate bandwidth provided by multiple NICs offers potential for improved network performance. However, effectively utilizing this bandwidth while maintaining fairness between flows and respecting quality of service (QoS) requirements presents challenges. Considerations include ensuring equitable bandwidth distribution among flows, prioritizing certain flows based on their importance or time-sensitivity, adapting to changing network conditions and flow demands in real-time, compensating for performance issues on individual NICs, and scaling efficiently to systems with large numbers of NICs and flows.

Existing approaches often rely on centralized controllers to monitor all NICs and flows, actively adjusting bandwidth allocation. However, these centralized approaches can introduce latency, create single points of failure, and struggle to scale to large systems. Additionally, they may not react quickly enough to rapid changes in network conditions or flow demands.

As computing systems continue to evolve and network traffic demands increase, there is ongoing interest in developing distributed, scalable, and adaptive methods for load balancing and fairness across multiple NICs that can maintain optimal performance without relying on centralized control or extensive inter-NIC communication.

### OVERVIEW

The invention is defined by the claims. In order to illustrate the invention, aspects and embodiments which may or may not fall within the scope of the claims are described herein.

There is provided in accordance with an embodiment of the present disclosure, a processor, comprising circuitry to implement an application programming interface (API) to manage processing of at least one traffic flow across a plurality of network devices coupled to at least one processing element generating the at least one traffic flow, and a memory to store data used by the API associated with managing the processing of the at least one traffic flow.

Further in accordance with an embodiment of the present disclosure, the API includes functions to create and manage contexts defining sets of network devices over which load balancing occurs.

Still further in accordance with an embodiment of the present disclosure, the API includes functions to create and manage at least one virtual work queue distributed across the plurality of network devices.

Additionally, in accordance with an embodiment of the present disclosure, the API includes a function to specify at least one quality-of-service indication of the at least one virtual work queue.

Moreover, in accordance with an embodiment of the present disclosure, the at least one quality-of-service indication may include bandwidth shares among traffic flows associated with the at least one virtual work queue.

Further in accordance with an embodiment of the present disclosure, the API includes a function to post remote memory access work requests to the at least one virtual work queue.

Still further in accordance with an embodiment of the present disclosure, the work requests include any one or more of the following local and remote memory addresses, data size, and counter indices for tracking progress.

Additionally in accordance with an embodiment of the present disclosure, the counter indices indicate the counters to be updated.

Moreover, in accordance with an embodiment of the present disclosure, the API includes functions to create, destroy, modify, query, and wait on counters.

Further in accordance with an embodiment of the present disclosure, the counters include at least one local counter and at least one remote counter, wherein the at least one local counter tracks completion of remote memory access operations by at least one local device and the at least one remote counter tracks remote memory access operations by at least one remote device.

Still further in accordance with an embodiment of the present disclosure, the API includes a function to signal the network devices that work is available in at least one virtual work queue.

Additionally in accordance with an embodiment of the present disclosure, the at least one processing element comprises at least one of a central processing unit (CPU) or a graphics processing unit (GPU) or a data processing unit (DPU).

There is provided in accordance with another embodiment of the present disclosure, a system, comprising at least one processing element to generate at least one traffic flow, and execute at least one instance of an application programming interface (API) to manage processing of the at least one traffic flow across a plurality of network devices, a plurality of network devices coupled to the at least one processing element, and at least one memory associated with the at least one processing element to store at least one virtual work queue and data used by the API associated with managing the processing of the at least one traffic flow across the plurality of network devices.

Further in accordance with an embodiment of the present disclosure, the API includes functions to create and manage contexts defining sets of network devices over which load balancing occurs.

Still further in accordance with an embodiment of the present disclosure, the API includes functions to create and manage the at least one virtual work queue distributed across the plurality of network devices.

Additionally, in accordance with an embodiment of the present disclosure, the API includes a function to specify at least one quality-of-service indication of the at least one virtual work queue.

Moreover, in accordance with an embodiment of the present disclosure, the at least one quality-of-service indication includes bandwidth shares among traffic flows associated with the at least one virtual work queue.

Further in accordance with an embodiment of the present disclosure, the API includes a function to post remote memory access work requests to the at least one virtual work queue.

Still further in accordance with an embodiment of the present disclosure, the work requests include any one or more of the following local and remote memory addresses, data size, and counter indices for tracking progress.

Additionally in accordance with an embodiment of the present disclosure, the API includes functions to create, destroy, modify, query, and wait on counters.

Moreover, in accordance with an embodiment of the present disclosure, the counters include at least one local counter and at least one remote counter, wherein the at least one local counter tracks completion of remote memory access operations by at least one local device and the at least one remote counter tracks remote memory access operations by at least one remote device.

Further in accordance with an embodiment of the present disclosure, the API includes a function to signal the network devices that work is available in at least one virtual work queue.

Still further in accordance with an embodiment of the present disclosure, the at least one processing element comprises at least one of a central processing unit (CPU) or a graphics processing unit (GPU) or a data processing unit (DPU).

There is also provided in accordance with still another embodiment of the present disclosure, a method, comprising implementing an application programming interface (API) to manage processing of at least one traffic flow across a plurality of network devices coupled to at least one processing element generating the at least one traffic flow, and storing data used by the API associated with managing the processing of the at least one traffic flow.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

The present disclosure will be understood from the following detailed description, taken in conjunction with the drawings in which:
Fig. 1 is a simplified block diagram of a computing system constructed and operative in accordance with an embodiment of the present disclosure;
Fig. 2 is a more detailed block diagram of a network interface controller of Fig. 1;
Fig. 3 is a simplified pictorial illustration of a multi-NIC system with work queues, in accordance with an embodiment of the present disclosure;
Fig. 4 is a flowchart including steps in a method of data acquisition for the system of Fig. 3;
Fig. 5 is a simplified pictorial illustration of dynamic bandwidth allocation in a multi-NIC system, in accordance with an embodiment of the present disclosure;
Fig. 6 is a flowchart including steps in a method of managing bandwidth allocation across multiple network interface controllers;
Fig. 7 is a block diagram of the computing system of Fig. 1 illustrating API functionality;
Fig. 8 is a more detailed block diagram of an application programming interface for use in the system of Fig. 7; and
Fig. 9 is a block diagram that schematically illustrates a computing system, e.g., a data center or a High-Performance Computing (HPC) cluster, in accordance with an embodiment of the present disclosure.

### DESCRIPTION OF EXAMPLE EMBODIMENTS

### OVERVIEW OF EXAMPLE EMBODIMENTS

Modern high-performance computing systems, data centers, and network infrastructure often employ multiple network interface controllers (NICs) per node to handle increasing network traffic demands. While these multi-NIC configurations offer higher aggregate bandwidth and improved fault tolerance, effectively utilizing this bandwidth while maintaining fairness between flows and respecting quality of service (QoS) requirements presents several challenges.

Possible solutions to managing bandwidth in multi-NIC systems include both centralized and distributed control methods. Centralized approaches may utilize a controller to monitor all NICs and flows, actively adjusting bandwidth allocation based on a global view of the system. Distributed approaches may enable individual NICs to make local decisions based on their own observations, with minimal coordination between devices. Both approaches offer different advantages depending on the specific deployment scenario and system requirements.

However, a significant challenge remains in providing a standardized way to manage multi-NIC load balancing systems. This creates difficulties for developers who implement custom interfaces for each network configuration, leading to increased development time, reduced portability, and potential compatibility issues when integrating with different hardware or software environments.

Embodiments of the present disclosure address at least some of the above drawbacks by providing a system and method that implements an application programming interface (API) to manage processing of one or more traffic flows across a plurality of network devices coupled to one or more processing elements generating the traffic flow(s). This API-driven approach enables load balancing across multiple NICs while maintaining fairness and QoS. The system may be implemented with centralized control, or without relying on centralized control or extensive inter-NIC communication.

In some embodiments, the API includes functions to create and manage contexts defining sets of network devices over which load balancing occurs. This allows for flexible configuration of load balancing domains, adapting to different network topologies and application requirements.

In some cases, the API provides functions to create and manage one or more virtual work queues distributed across the plurality of network devices. The virtual work queue(s) may be associated with one or more quality-of-service indications, allowing for fine-grained control over bandwidth allocation and prioritization of traffic flows.

The system may allow any given data flow to be processed concurrently by multiple NICs. In some embodiments, each NIC may independently adjust the bandwidth shares of traffic flows based on local observations, comparing expected progress with actual progress for each flow. This approach enables quick adaptation to changing network conditions and efficient scaling to large numbers of NICs and flows.

In some embodiments, the API includes functions to create, destroy, modify, query, and wait on counters. These counters may include one or more local counters that track completion of remote memory access operations by one or more local devices and one or more remote counters that track completion of remote memory access operations by one or more remote devices. This counter mechanism provides a flexible way to monitor and manage the progress of data transfers across the distributed system.

The API-driven approach provides a standardized interface for applications to interact with the multi-NIC load balancing system, simplifying integration and management of complex network configurations.

### SYSTEM DESCRIPTION

Documents incorporated by reference herein are to be considered an integral part of the application except that, to the extent that any terms are defined in these incorporated documents in a manner that conflicts with definitions made explicitly or implicitly in the present specification, only the definitions in the present specification should be considered.

In some cases, the following definitions may apply to terms used throughout this disclosure:
A "traffic flow" may refer to a stream of data to be transmitted over a network. In some cases, a traffic flow may be divided into fixed-size chunks for processing. A traffic flow may be a network flow. As used herein, a "network flow" may refer to a sequence of related packets or data units that share common characteristics and are transmitted between a source and destination over a network. Network flows may be identified by attributes such as source and destination IP addresses, port numbers, protocol types, or other identifiers. In some implementations, a network flow may represent a logical connection or communication session between network endpoints, and may persist for varying durations depending on the nature of the data transfer or application requirements.

A "bandwidth share" may refer to a portion of the total available network bandwidth allocated to a particular traffic flow. The bandwidth share may be represented by a parameter that defines the relative amount of bandwidth a flow is intended to use.

"Quality of service" may refer to the ability to prioritize certain traffic flows over others based on their importance or time-sensitivity, while still maintaining overall fairness.

"Fairness" in the context of network traffic processing may refer to ensuring that each traffic flow receives an equitable share of the total available bandwidth according to its assigned bandwidth share.

A "network interface controller (NIC)" may refer to a hardware component that connects a computing device to a network. In some cases, multiple NICs may be present in a single system to handle increasing network traffic demands.

A "scheduling iteration" may refer to a cycle during which NICs serve one or more traffic flows. At each iteration, NICs may process data from different traffic flows according to their assigned bandwidth shares.

A "data chunk" may refer to a fixed-size portion of a traffic flow that can be processed independently. In some cases, NICs may use work queues to manage the processing of these data chunks for different traffic flows, for example, based on work requests which define the data chunks to be processed. Each work request may refer to one or more data chunks to be processed.

As used herein, a "data processing unit (DPU)" may refer to a specialized processor that combines networking, storage, and compute capabilities to offload and accelerate data-intensive tasks from a main central processing unit. A DPU may include network interfaces, programmable processing cores, and memory to handle data movement and processing independently.

As used herein, a "system on chip (SoC)" may refer to an integrated circuit that incorporates multiple components of a computer or electronic system onto a single chip. An SoC may include processors, memory, input/output ports, and other digital and analog functions integrated on one substrate.

As used herein, a "graphics processing unit (GPU)" may refer to a specialized electronic circuit designed to rapidly manipulate and alter memory to accelerate the creation of images in a frame buffer intended for output to a display device. GPUs may also be used for general-purpose computing tasks that can benefit from parallel processing.

As used herein, a "network interface that is integrated into any other processing unit" may refer to a network communication component that is built directly into another type of processor, such as a CPU, GPU, or SoC. This integrated network interface may provide network connectivity without requiring a separate network interface card, potentially improving efficiency and reducing overall system complexity.

As used herein, a "processor" may refer to an electronic circuit or integrated device designed to execute instructions and perform computations. A processor may include one or more cores and may be capable of running various software programs and managing hardware components.

As used herein, "circuitry" may refer to a collection of interconnected electronic components that perform specific functions within a device or system. Circuitry may include both analog and digital components and may be implemented on integrated circuits or printed circuit boards. Circuitry may also include a processor, which may be hard-wired and/or programmable.

As used herein, "memory" may refer to a device or component used to store data and instructions for use by a processor. Memory may include volatile and non-volatile types, such as RAM, ROM, or flash memory.

As used herein, a "network device" may refer to a hardware component that facilitates communication and data transfer between devices on a network. Network devices may include routers, switches, hubs, and network interface controllers (NICs).

As used herein, a "processing element" may refer to a component within a computing system capable of executing instructions and performing computations. Processing elements may include CPUs, GPUs, DPUs, or specialized processors designed for specific tasks.

As used herein, an "application programming interface (API)" may refer to a standardized interface that provides functions for managing the processing of multiple traffic flows across a plurality of network devices. The API includes functions for creating and managing contexts, virtual work queues, quality-of-service indications, work requests, counters, and network signaling to enable efficient load balancing and coordination of traffic flows across multiple network devices without requiring custom implementations for each network configuration.

As used herein, "virtual work queues" may refer to logical structures used to organize and manage tasks or data to be processed by network devices. Virtual work queues may be distributed across multiple physical devices and may help in load balancing and efficient resource utilization.

As used herein, "contexts" may refer to sets of parameters or configurations that define the operational environment for network devices or processes. Contexts may include information about network topology, device capabilities, or other relevant settings.

As used herein, "counters" may refer to variables or data structures used to track the progress or occurrence of specific events or operations in a system. Counters may be used to monitor performance, manage resources, or trigger actions based on certain thresholds. For example, counters may be used to track the number of read or write operations performed by network devices, allowing the system to monitor data transfer progress, detect imbalances in workload distribution, and ensure that all read and write operations are properly completed across multiple NICs processing the same traffic flows.

As used herein, "work requests" may refer to instructions or data structures that define tasks to be performed by network devices or processing elements. Work requests may include information about data to be processed, operations to be performed, or resources to be allocated. For example, a work request may be a work queue entry (WQE).

As used herein, "quality-of-service indications" may refer to parameters or metrics that specify the level of performance, priority, or resource allocation for specific traffic flows or processes. Quality-of-service indications may help ensure that given operations receive appropriate resources and attention.

As used herein, "manage processing" may refer to the act of coordinating, controlling, and optimizing the execution of tasks or operations across multiple devices or components. Managing processing may involve load balancing, resource allocation, and performance monitoring.

As used herein, "create" may refer to the action of generating or initializing new instances of objects, data structures, or processes within a system. Creating may involve allocating resources, setting initial values, or establishing relationships between components.

As used herein, "destroy" may refer to the action of removing or deallocating instances of objects, data structures, or processes from a system. Destroying may involve freeing up resources, cleaning up associated data, or breaking relationships between components.

As used herein, "modify" may refer to the action of changing or updating existing objects, data structures, or processes within a system. Modifying may involve altering parameters, reconfiguring relationships, or adjusting resource allocations.

As used herein, "query" may refer to the action of requesting information or status updates about objects, data structures, or processes within a system. Querying may involve retrieving current values, checking states, or gathering performance metrics.

As used herein, "wait on" may refer to the action of suspending execution or delaying further operations until a specific condition is met or an event occurs. Waiting may involve monitoring counters, checking for completion of tasks, or synchronizing processes.

As used herein, "signal" may refer to the action of notifying or triggering other components or processes about a specific event or state change. Signaling may involve setting flags, sending messages, or activating interrupts to coordinate activities across a system.

As used herein, "post" may refer to the action of submitting or adding new work requests, data, or tasks to a queue or processing system. Posting may involve placing items in virtual work queues or notifying devices about available work.

As used herein, "local" may refer to operations, resources, or components that are directly associated with or accessible to a specific device or process or network. Local elements may be physically close or logically connected to the entity in question.

As used herein, "remote" may refer to operations, resources, or components that are not directly associated with or immediately accessible to a specific device or process or network. Remote elements may require network communication or additional steps to access or interact with.

As used herein, "load balancing" may refer to the process of distributing workloads or network traffic across multiple computing resources or devices. Load balancing may aim to optimize resource utilization, maximize throughput, and ensure system reliability.

As used herein, a "central processing unit (CPU)" may refer to the primary processor in a computer system responsible for executing instructions, performing calculations, and coordinating the activities of other hardware components. A CPU may handle a wide range of general-purpose computing tasks.

As used herein, a "data processing unit (DPU)" may refer to a specialized processor designed to offload and accelerate data-intensive tasks from the main CPU. A DPU may combine networking, storage, and compute capabilities to handle complex data operations efficiently.

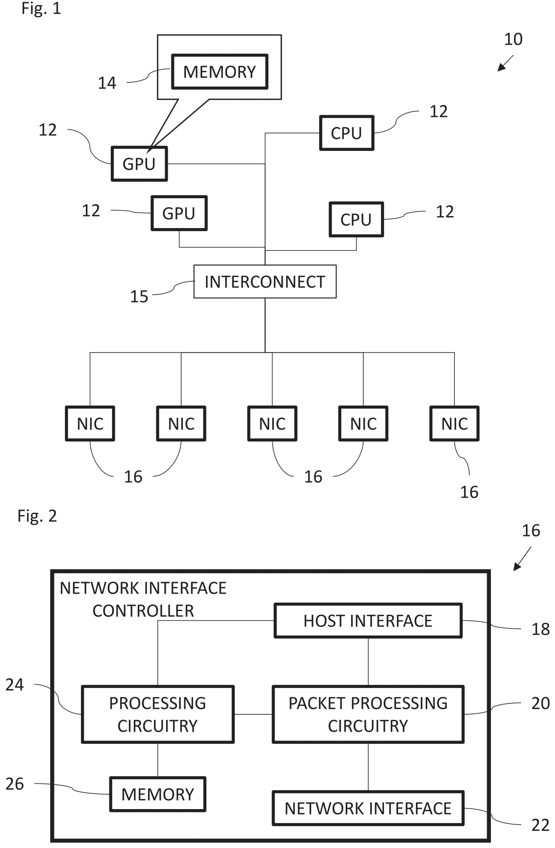

Reference is now made to Fig. 1, which is a block diagram of a computing system 10. The computing system 10 may include one or more processing units 12 and multiple network interface controllers 16.

In some cases, the processing unit(s) 12 may be one or more central processing units (CPU(s)) and/or one or more graphics processing units (GPU(s)). The multiple processing units 12 may be connected to the network interface controllers 16 via a system interconnect 15, such as Peripheral Component Interconnect Express (PCIe).

Each processing unit 12 may include memory 14 to store data and instructions for that processing unit. The network interface controllers 16 may process both incoming and outgoing traffic flows between the computing system 10 and external networks.

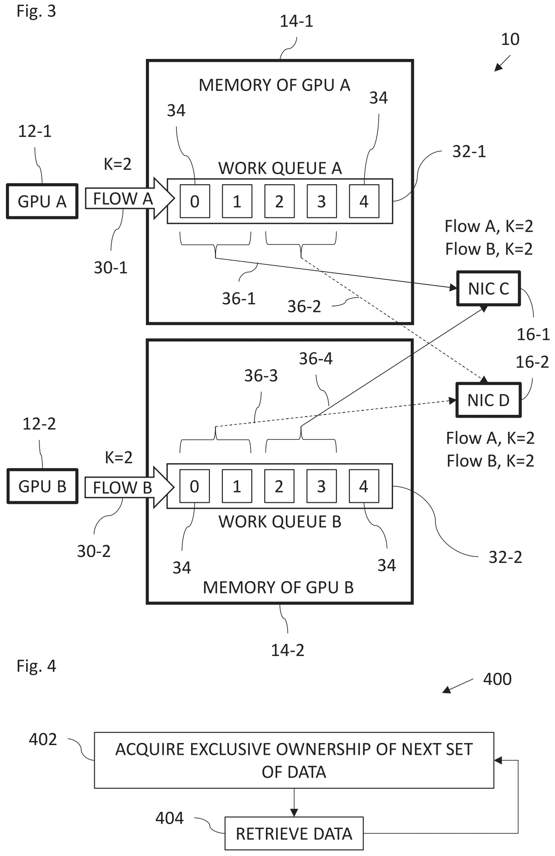

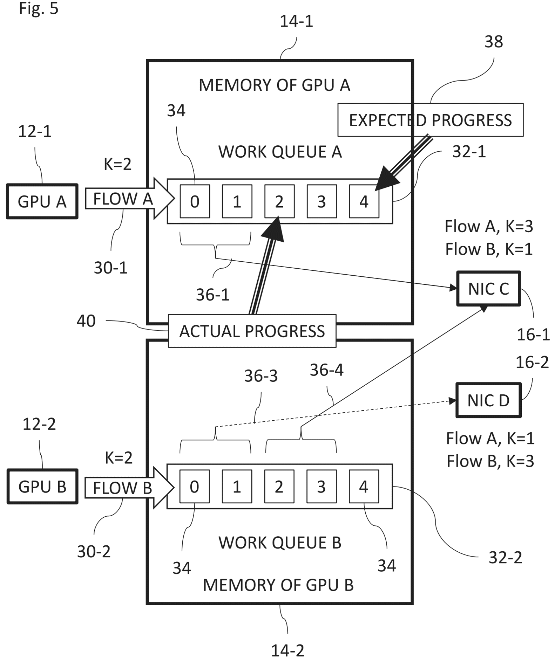

In some cases, the processing unit(s) 12 may generate multiple traffic flows to be transmitted over a network. The network interface controllers 16 may process these traffic flows concurrently, distributing the workload across multiple network interface controllers 16. This concurrent processing may allow for efficient utilization of available network bandwidth. In some cases, a traffic flow or more than one traffic flow may be processed concurrently by the network interface controllers 16. For example, two NICs may both process flows A and B concurrently, as described below in more detail with reference to Figs. 3 and 5.

As used herein, the term "concurrently" may refer to a processing pattern where multiple flows are interleaved over a given time period. In this context, concurrently may not necessarily mean that blocks from different flows are processed simultaneously. Instead, it may involve processing at least one block from a first flow, followed by at least one block from a second flow, then returning to process at least one block from the first flow, and so on, all within the same time period. This interleaved processing approach may allow for the handling of multiple flows in a quasi-parallel manner, even if individual blocks from different flows are not processed at the exact same instant.

The network interface controllers 16 may also receive incoming traffic flows from external networks. These incoming flows may be processed by the network interface controllers 16 and forwarded to the appropriate processing unit(s) 12 within the computing system 10.

The interaction between the processing unit(s) 12 and network interface controllers 16 may enable the computing system 10 to handle complex networking tasks efficiently. By leveraging multiple network interface controllers 16, the computing system 10 may achieve higher aggregate bandwidth and improved fault tolerance compared to systems with a single network interface controller.

Reference is now made to Fig. 2, which is a detailed block diagram of one of the network interface controllers 16. The network interface controller 16 may include several internal components for processing network traffic flows.

Network interface controller 16 may include a host interface 18 for communicating with other components of a computing system such as the processing unit(s) 12. The host interface 18 may enable the network interface controller 16 to exchange data and control information with processing unit(s) 12 and other devices within the computing system 10.

The network interface controller 16 may include packet processing circuitry 20 connected to the host interface 18. The packet processing circuitry 20 may be configured to perform operations such as packet segmentation, reassembly, and classification on network traffic flows.

The network interface controller 16 may include a network interface 22 coupled to the packet processing circuitry 20 for external network communications. The network interface 22 may be configured to enable the network interface controller 16 to send data to, or receive data from, at least one remote device over a network. In some cases, the network interface 22 may include physical layer circuitry for transmitting and receiving network signals.

The network interface controller 16 may also include processing circuitry 24 connected to the host interface 18 and packet processing circuitry 20. The processing circuitry 24 may be connected to the packet processing circuitry 20. The processing circuitry 24 may manage the overall operation of the network interface controller 16, including coordinating data movement between components and implementing traffic flow management algorithms.

The processing circuitry 24 may be coupled to NIC memory 26 for local data storage. The NIC memory 26 may store configuration information, packet buffers, and other data used in processing network traffic flows.

In some cases, the processing circuitry 24 may manage data flow between the host interface 18, packet processing circuitry 20, and NIC memory 26. This may enable efficient handling of traffic flows as data moves through the network interface controller 16.

The network interface controller 16 may process network traffic flows through coordination between the host interface 18, packet processing circuitry 20, processing circuitry 24, NIC memory 26, and network interface 22. In some cases, the processing circuitry 24 may monitor and adjust bandwidth allocation for different traffic flows processed by the network interface controller 16, as described in more detail with reference to Figs. 3-6.

Reference is now made to Fig. 3 , which is a block diagram illustrating multiple NICs with work queues in the system 10 of Fig. 1. Fig. 3 illustrates two NICs for the sake of simplicity.

The system 10 comprises a first processing unit 12-1 and a second processing unit 12-2 to process data associated with traffic flows. In some cases, the first processing unit 12-1 and the second processing unit 12-2 may be GPUs (as shown in Fig. 3) or CPUs, or a CPU and a GPU. The system also comprises a first network interface controller 16-1 and a second network interface controller 16-2 coupled to the first processing unit 12-1 and the second processing unit 12-2.

A first traffic flow 30-1 (flow A) and a second traffic flow 30-2 (flow B) are associated with the first processing unit 12-1 and the second processing unit 12-2, respectively. The traffic flows may be generated by the processing units 12-1, 12-2. In some embodiments, the traffic flows may be generated by a single processing unit.

Each traffic flow may be assigned a bandwidth share parameter, denoted as "K" in Fig. 3. In the illustrated example, both the first traffic flow 30-1 and the second traffic flow 30-2 are assigned a bandwidth share parameter K=2, for the sake of simplicity. Therefore, in the example of Fig. 3, the flows are allocated the same value of the bandwidth share parameter. However, flows may be allocated different values of the bandwidth share parameter.

The system includes a first work queue 32-1 and a second work queue 32-2, which may be stored in memory 14-1 and 14-2 accessible by the processing units 12-1, 12-2, respectively, and network interface controllers16. The memory could be in the memory of the same processing unit or on a different processing unit. For example, a GPU may establish a work queue in the memory of a CPU or another GPU.

The first work queue 32-1 and the second work queue 32-2 may include work requests that describe the work to be performed and indicators to the block or blocks to be processed. These work requests may be in the form of work queue entries or elements (WQEs). In some implementations, the indicators may be links or pointers to the specific data blocks that need processing.

In some cases, the work queue may directly include the blocks to be processed, rather than work requests. For the sake of simplicity in the illustrations and descriptions that follow, the work queues are depicted as containing the actual blocks to be processed. However, it should be understood that the methods described herein for adjusting the processing rate of the work queues according to the progress of the work queues may also be applied when the work queues include work requests instead of the actual data blocks.

The work requests, when present, may contain information such as the type of operation to be performed, the priority of the task, and any specific parameters required for processing. This structure allows for flexible management of work distribution across multiple NICs, as the work requests can be easily queued, prioritized, and distributed based on the current system state and processing requirements.

The first work queue 32-1 and the second work queue 32-2 contain multiple data chunks 34. In some cases, the data chunks 34 may represent units of work or data to be processed by the network interface controllers. The first processing unit 12-1 may process the first traffic flow 30-1 (flow A) and add corresponding data chunks 34 to the first work queue 32-1 (work queue A). Similarly, the second processing unit 12-2 may process the second traffic flow 30-2 (flow B) and add corresponding data chunks 34 to the second work queue 32-2 (work queue B). In some cases, the processing units 12 may generate work requests that define the data chunks to be processed, and these work requests may be added to the respective work queues. The network interface controllers 16-1 (NIC C) and 16-2 (NIC D) may then retrieve and process these data chunks or work requests from the work queues according to their assigned bandwidth shares. For example, if K=2, the relevant NIC retrieves 2 chunks of data at a time from the corresponding work queue.

The first network interface controller 16-1 and the second network interface controller 16-2 process the multiple traffic flows according to the assigned bandwidth shares. Each traffic flow may be processed concurrently by both network interface controllers. Lines 36-1, 36-2, 36-3, and 36-4 illustrate the connections and data flow between the processing units, work queues, and network interface controllers.

Fig. 3 shows first network interface controller 16-1 acquiring the first two chunks 34 (e.g., chunk 0 and chunk 1) from work queue A (line 36-1). Similarly, the second network interface controller 16-2 may acquire chunks 34 (e.g., chunk 2 and 3) from work queue A (line 36-2). This retrieval process may continue sequentially, with the first network interface controller 16-1 acquiring subsequent chunks (e.g., chunks 4 and 5) in later iterations, and so on. When the work queue includes work requests referring to data chunks, NIC 16-1 fetches the relevant work request(s), and then fetches the data chunk(s) from wherever they are indicated in the work request(s), rather than directly from the work queue. The acquisition by the NICs is performed on the chunks. Therefore, if the work queues include work requests, the acquisition by the NICs is on the chunks and not on the work queues.

Fig. 3 also shows second network interface controller 16-2 acquiring the first two chunks 34 (e.g., chunk 0 and chunk 1) from work queue B (line 36-3). Similarly, the first network interface controller 16-1 may acquire chunks 34 (e.g., chunk 2 and 3) from the work queue B (line 36-4). This retrieval process may continue sequentially, with the second network interface controller 16-2 acquiring subsequent chunks (e.g., chunks 4 and 5) in later iterations, and so on.

This interleaved retrieval process allows both network interface controllers 16 to process multiple traffic flows concurrently, potentially improving overall system efficiency and bandwidth utilization. The number of chunks retrieved by each network interface controller may vary based on factors such as the assigned bandwidth shares, current network conditions, and the state of the work queues.

The processing circuitry 24 of each network interface controller 16 may receive bandwidth share assignments for the multiple traffic flows from the processing devices 12 or an orchestration node. These assignments determine how the network interface controllers allocate their processing resources among the traffic flows.

Reference is now made to Fig. 4, which illustrates a flowchart 400 depicting a data acquisition process that may be performed by the processing circuitry 24 of each network interface controller 16. The flowchart 400 includes a block 402 for acquiring exclusive ownership of the next set of data, followed by a block 404 for retrieving the data.

In some cases, the processing circuitry 24 of each network interface controller may be configured to acquire exclusive ownership of the next set of data to be processed for each traffic flow atomically. This atomic acquisition may be implemented using operations such as fetch-and-add or compare-and-swap. By acquiring exclusive ownership, the network interface controllers 16 ensure that no two controllers process the same data chunk, promoting efficient distribution of work across the multiple network interface controllers 16.

The bandwidth share assignments and atomic data acquisition process allow the system to manage multiple traffic flows efficiently, ensuring fair allocation of resources and preventing conflicts in data processing across the network interface controllers.

Reference is now made to Fig. 5, which is a block diagram illustrating dynamic bandwidth allocation in multi-NIC system 10.

In some cases, if the processing of flow A by NIC 16-1 (NIC C) and NIC 16-2 (NIC D) proceeds as expected, NIC C may acquire and process blocks 0 and 1, while NIC D may acquire and process blocks 2 and 3. Subsequently, NIC C may acquire and process blocks 4 and 5, and this pattern may continue in a similar manner. However, if NIC D encounters a problem with processing flow A, the system may adapt to maintain overall fairness and efficiency.

In such a scenario, the effective bandwidth share parameter K of flow A for NIC D may be reduced from 2 to 1. Concurrently, the effective bandwidth share parameter of flow B for NIC D may increase from 2 to 3. This adjustment may occur due to the spare capacity provided by not processing flow A according to its originally assigned bandwidth share parameter.

To compensate for this imbalance, NIC C may adjust its processing of the flows. In some aspects, NIC C may increase its effective bandwidth share parameter for flow A from 2 to 3, while reducing its effective bandwidth share parameter for flow B from 2 to 1. This adaptive approach may help maintain overall fairness in the processing of both flows across the two NICs.

The system may implement these adjustments dynamically, based on ongoing monitoring of the actual progress of each flow compared to the expected progress. By making these compensatory changes, the system may strive to maintain the intended aggregate bandwidth allocation for each flow, even when one NIC experiences processing difficulties.

In some implementations, the processing circuitry 24 of each NIC 16 may periodically reassess the situation and further adjust the effective bandwidth share parameters as needed. This ongoing adaptation may allow the system 10 to respond to changing conditions and maintain optimal performance across multiple traffic flows 30 and NICs 16.

In some cases, processing circuitry 24 of each NIC 16 is configured to compare an expected progress 38 with an actual progress 40 for each traffic flow. The expected progress 38 and actual progress may be measured using any suitable unit, such as byte offset or chunk indicator. The processing circuitry 24 may be configured to compute the expected progress 38 based on a total number of the network interface controllers 16 serving each traffic flow and a function of the bandwidth share K for each traffic flow. For example, if K=2 for the given traffic flow and there are 4 NICs processing that flow, the expected progress for NIC A may be equal to the offset of the chunk previously acquired by NIC A plus 8 (i.e., 2 x 4). IfNIC A previously acquired chunks 2 and 3, then the expected progress would be equal to chunk 10 (i.e., 2 plus 8 (i.e., 2 x 4).

The share of aggregated bandwidth Bi for a flow i may be computed as: ${B}_{i} = {B}_{TOT} \times \frac{{K}_{i}}{{\sum }_{j = 0}^{j < N} {K}_{j}}$

Where BTOT may represent the total aggregate injection bandwidth across all NICs, Ki may be the bandwidth share parameter for flow i, and N may be the total number of traffic flows, and j is an index. This formula may allow the system to allocate different bandwidth shares for each flow, potentially enabling quality-of-service differentiation between flows.

The processing circuitry 24 of each network interface controller 16 may be configured to compare the expected progress 38 with the actual progress 40 for each traffic flow at respective scheduling iterations, for example, when data is acquired from the respective work queues 32 by the NICs 16 for processing. Based on this comparison, the processing circuitry 24 may dynamically adjust the respective bandwidth share for each traffic flow.

In some cases, when the actual progress 40 is less than the expected progress 38 for a traffic flow, the processing circuitry 24 may increase the respective bandwidth share for that traffic flow. Conversely, when the actual progress 40 is greater than the expected progress 38, the processing circuitry 24 may decrease the respective bandwidth share for the traffic flow.

The bandwidth share adjustment may be based on a simple increment or decrement, or more complex heuristics depending on the specific implementation. In some cases, the processing circuitry may consider additional factors such as congestion control data, queue states of other flows, historical performance data, or current network conditions when deciding on the size of the bandwidth share adjustments.

By dynamically adjusting bandwidth shares based on the comparison between expected and actual progress, the system 10 may maintain fair processing of traffic flows across multiple network interface controllers without requiring centralized control.

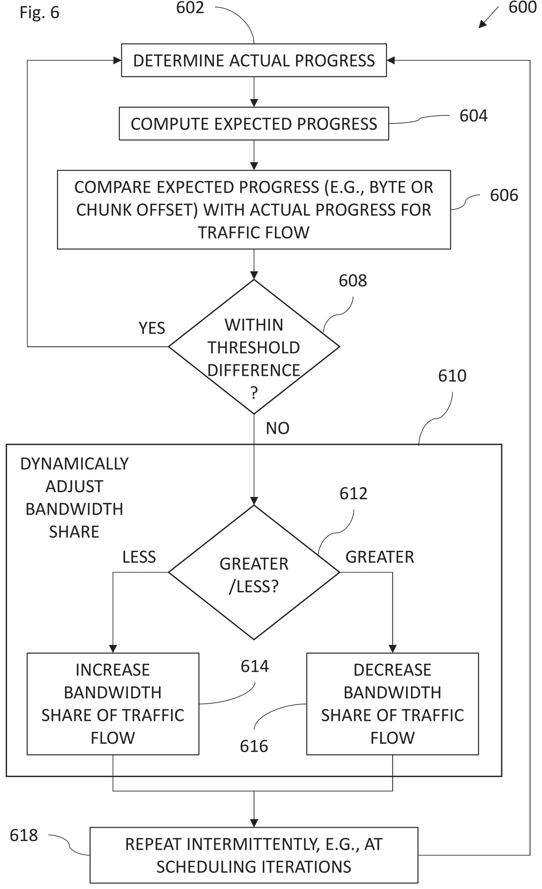

Reference is now made to Fig. 6, which is a flowchart illustrating a method 600 for managing bandwidth allocation for a given traffic flow by each network interface controller (NIC) 16 processing the same traffic flow. The method 600 is generally performed for each traffic flow by each NIC 16.

The method 600 includes several steps for dynamically adjusting bandwidth shares based on comparisons between expected and actual progress of traffic flows. The processing circuitry 24 of NIC 16 may be configured to perform one or more of the steps of blocks 602-618 described below.

The method 600 begins at a block 602, where actual progress of a given traffic flow is determined. This may involve measuring the current byte offset or chunk offset processed for the given traffic flow. At a block 604, the method 600 computes expected progress for the given traffic flow. The expected progress may be calculated based on the assigned bandwidth share and the total number of NICs processing the given traffic flow. For example, if K=2 for the given traffic flow and there are 4 NICs processing that flow, the expected progress for NIC A may be equal to the offset of the chunk previously acquired by NIC A plus 8 (i.e., 2 x 4). If NIC A previously acquired chunks 2 and 3, then the expected progress would be equal to chunk 10 (i.e., 2 plus 8 (i.e., 2 x 4).

The method 600 proceeds to a block 606, where the expected progress is compared with the actual progress for the given traffic flow. This comparison allows the system to determine if the given traffic flow is being processed as expected or if adjustments are needed.

At an optional decision block 608, the method 600 determines whether the difference between the expected and actual progress is within a threshold difference. If the difference is within the threshold ("yes" branch from decision block 608), the method 600 returns to block 602 to continue monitoring. If the difference is not within the threshold ("no" branch from decision block 608), the method 600 proceeds to a block 610 to dynamically adjust the bandwidth share. The step of block 608 allows the system to ignore small differences between the actual progress and the expected progress. In some embodiments, the threshold may be set to zero, so that any differences between the actual progress and the expected progress lead to an adjustment of the bandwidth share for the given traffic flow being analyzed.

As part of the step of block 610, at a decision block 612, the method 600 evaluates whether the actual progress is greater or less than expected. If the actual progress is less than expected ("less" branch from decision block 612), the method 600 proceeds to block 614 to increase the bandwidth share of the given traffic flow. If the actual progress is greater than expected ("greater" branch from decision block 612), the method 600 proceeds to a block 616 to decrease the bandwidth share of the given traffic flow. The magnitude of the adjustment to the bandwidth share may be a function of the difference between the expected and actual progress and/or depend on other factors such as congestion control data, queue states of other flows, historical performance data, or current network conditions.

After either block 614 or block 616, the method 600 proceeds to a block 618, where the process repeats intermittently, for example at scheduling iterations (e.g., when data of the traffic flow is acquired by the NIC 16). From block 618, the method 600 returns to block 602 to continue monitoring and adjusting bandwidth allocation.

In some cases, the dynamic adjustment of bandwidth shares may be based on various factors beyond the simple comparison of expected and actual progress. For example, the processing circuitry may consider queue states of other flows when adjusting the bandwidth share for a particular flow. This allows the system to balance resources across multiple traffic flows more effectively.

The processing circuitry may also take into account current network conditions when making bandwidth share adjustments. For instance, if network congestion is detected on a particular path, the bandwidth share for affected flows may be adjusted accordingly.

In some implementations, the processing circuitry 24 may utilize congestion control data to inform bandwidth share adjustments. This may involve analyzing information about network congestion points or bottlenecks to optimize flow distribution across available NICs.

Additionally, the processing circuitry 24 may consider historical performance data when dynamically adjusting bandwidth shares. By analyzing past performance trends for different flows and network conditions, the system may make more informed decisions about how to allocate bandwidth resources.

By incorporating these various factors into the bandwidth share adjustment process, the method 600 allows for a more sophisticated and adaptive approach to managing traffic flows across multiple NICs. This may result in improved overall system performance and more efficient utilization of available network resources.

In some cases, a network interface controller (NIC) device may include processing circuitry to receive bandwidth share assignments for multiple traffic flows. The bandwidth share assignments may specify relative proportions of available bandwidth to allocate to each traffic flow. For example, a first traffic flow may be assigned 60% of the available bandwidth while a second traffic flow is assigned 40%.

The processing circuitry may receive the bandwidth share assignments from various sources. In some implementations, the assignments may be received from a centralized network management system. In other cases, the assignments may be determined locally by the NIC device based on observed network conditions or application requirements. The bandwidth share assignments may also be dynamically updated over time as network conditions or priorities change.

In some implementations, the processing circuitry may use different methods for calculating the expected progress of traffic flows beyond comparing byte offsets. For example, the expected progress may be calculated based on packet counts, data transfer rates, or more complex metrics that account for variations in packet sizes or priorities.

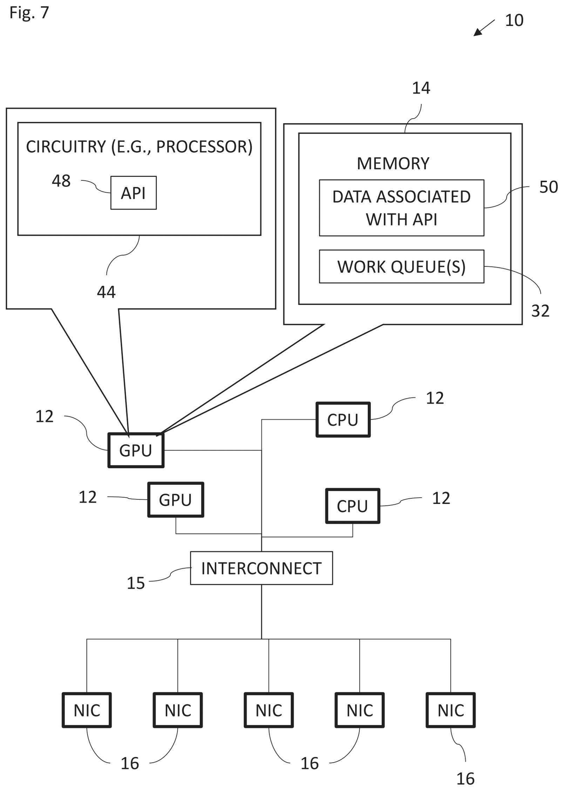

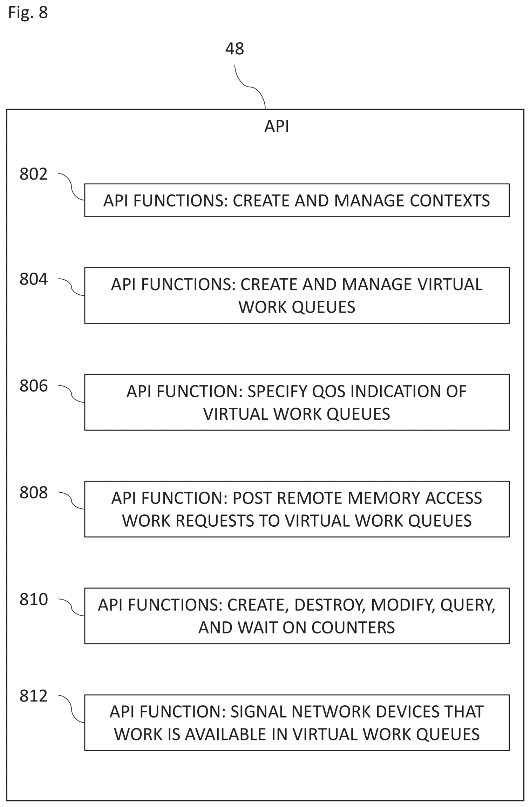

Reference is now made to Fig. 7, which is a block diagram of the computing system 10 of Fig. 1 illustrating API functionality, and Fig. 8, which is a block diagram of an application programming interface (API) 48.

Fig. 7 illustrates the computing system 10, which includes processing units 12 and network devices 16 coupled via interconnect 15. In some embodiments, each processing unit 12 includes circuitry 44 that executes an instance of API 48. Each processing unit 12 is associated with its own instance of memory 14 that stores data including API data 50 and one or more virtual work queues 32. Each processing unit generates one or more traffic flows and the circuitry 44 executes API 48 to manage processing the traffic flow(s) across network devices 16. The API data 50 stored in memory 14 is used by API 48 to manage operations between one or more of the processing units 12 and network devices 16.

Fig. 8 provides a more detailed view of the API 48, illustrating its various functional components. These components enable the API 48 to manage contexts, virtual work queue(s), quality of service indications, work requests, counters, and network signaling. The API 48 provides a comprehensive set of functions for efficiently managing the processing of one or more traffic flows across the plurality of network devices 16 in the computing system 700.

The API may include control API functionality and data API functionality that manage control and data functions, respectively. A processing unit 12 may execute control API and/or data API functionality. For example, a CPU or any suitable processing unit may execute control and data API functionality. A GPU or any suitable processing unit may execute data API functionality while a CPU may execute the control API functionality on behalf of that GPU. A CPU may also execute control API functionality on behalf of one or more other CPUs. Examples of data API functionality are blocks 808 and 812 of Fig. 8. The other blocks in Fig. 8 are related to control API functionality.

The system may manage load balancing between the network devices in a distributed manner, for example, as described above with reference to system 10 of Figs. 1-6, or in a centralized manner, or any suitable combination thereof. In some cases, the API 48 may provide flexibility to implement different load balancing approaches depending on the specific requirements of the computing environment. The system 10 may coordinate the network devices 16 to distribute traffic flow(s) and adjust bandwidth allocations using either distributed or centralized control mechanisms, or a hybrid approach that combines elements of both. This flexibility may allow the system to adapt to various network topologies, traffic patterns, and performance objectives.

Reference is again made to Fig. 7. The work queue(s) 32 (e.g., virtual work queues) facilitate the distribution of work across the network devices 16. The interconnect 15 provides connectivity between all components of computing system 10, allowing data and control information to flow between the processing units 12, memory 14, and network devices 16.

The processing units 12 generate one or more traffic flows. In some cases, the processing units 12 may include any one or more of the following: a central processing unit (CPU), a graphics processing unit (GPU), or a data processing unit (DPU). The network devices 16 are coupled to the processing units 12 and process the traffic flow(s). The API 48 implemented by the circuitry 44 manages the processing of one or more traffic flows across the network devices 16.

In a centralized load-balancing implementation, the circuitry 44 may dynamically adjust bandwidth shares for traffic flows based on progress comparison. The progress comparison may occur at scheduling iterations. For example, circuitry 44 may compare expected progress with actual progress for each traffic flow. In some cases, the expected progress may be computed based on the total number of network devices 16 serving each flow and a bandwidth share function. The network devices 16 may acquire exclusive ownership of the next data set to be processed atomically. This ensures that no two network devices 16 process the same data simultaneously.

When adjusting bandwidth shares, the circuitry 44 may consider various factors. These factors may include congestion control data, queue states of other flows, historical performance data, and current network conditions. This comprehensive approach allows for more sophisticated and context-aware adjustments to bandwidth allocation.

In some cases, each network device 16 may dynamically adjust bandwidth shares for traffic flows based on progress comparison, as described above in more detail with reference to Figs. 1-6.

The memory 14 stores API data 50 used by the API 48 associated with managing the processing of the traffic flow(s). This data may include configuration information, performance metrics, and other relevant information for efficient traffic flow management.

Through the API 48, the circuitry 44 may create and manage contexts defining sets of network devices 16 over which load balancing occurs. In some cases, a context may represent a logical grouping of network devices 16 that are managed together for load balancing purposes. The context may define the scope of load balancing operations, allowing the system to apply specific policies or configurations to a subset of network devices. For example, a context may include all network devices within a particular rack, datacenter, or geographical location.

Contexts may also be associated with specific applications, tenants, or workloads, enabling fine-grained control over how network resources are allocated and managed. The API 48 may allow for the creation of multiple contexts, each with its own set of parameters and policies for load balancing. This flexibility in context definition may enable administrators to tailor the load balancing behavior to the specific needs of different parts of the network or different types of traffic flows.

In some implementations, contexts may be hierarchical, allowing for nested groupings of network devices. This hierarchical structure may facilitate more complex load balancing strategies that can be applied at different levels of the network topology. The API 48 may provide functions to create, modify, and delete contexts, as well as to assign network devices to specific contexts or move them between contexts as needed.

The API 48 may also provide functions for creating and managing the virtual work queue(s) 32 distributed across the network devices 16. Managing a virtual work queue may involve several aspects of queue administration and control. In some cases, this may include creating a new virtual work queue, modifying an existing queue(s), and removing a queue(s) when no longer needed. The API may provide functions to adjust queue parameters such as size limits, priority levels, or quality of service settings.

The API may offer capabilities to monitor queue depths, track processing progress, and handle queue overflow conditions. In some implementations, managing a virtual work queue(s) may involve load balancing and work distribution across multiple network devices. The API may provide functions to dynamically allocate work items to different queues based on current system load, network conditions, or specific routing policies. This may help optimize resource utilization and improve overall system performance.

The management of virtual work queues may also include features for fault tolerance and error handling. The API may offer mechanisms to handle queue failures, redistribute work in case of device outages, and ensure data consistency across distributed queue implementations.

In some cases, virtual work queue management may incorporate monitoring and reporting capabilities. The API may provide functions to gather statistics on queue performance, generate alerts for exceptional conditions, and produce reports on work processing efficiency across the distributed system.

In some cases, the API 48 may include functions to create, destroy, modify, query, and wait on counters. These counters may be used to track the progress of data processing across the network devices 16.

The system 10 enables efficient management of one or more traffic flows across the network devices 16 through the implementation of the API 48 on one or more of the processing units 12. By utilizing the virtual work queues 32 and dynamic bandwidth allocation, the system 10 may achieve improved performance and resource utilization in processing network traffic.

Reference is now made to Fig. 8, which is a block diagram illustrating components of an application programming interface (API) 48. The API 48 includes various functions for managing contexts, virtual work queues, quality of service, work requests, counters, and network signaling across multiple network devices.

The API 48 includes context management API functions 802 for creating and managing contexts. These functions enable defining sets of network devices over which load balancing occurs. In some cases, the context management API functions 802 may allow specifying multiple network devices to be used for processing a traffic flow or flows. For example, a context_create() function may take as input parameters such as a list of network device identifiers, a context name, and configuration flags, and return a context handle that can be used in subsequent API calls. A context_destroy() function may take a context handle as input and release all resources associated with that context. A context_add_device() function may take a context handle and a network device identifier as inputs to dynamically add devices to an existing context. Similarly, a context_remove_device() function may allow removing devices from a context. These functions enable applications to define the scope of network devices that will participate in load balancing for specific traffic flows, similar to how the system described with reference to Figs. 1-6 coordinates multiple NICs 16 to process traffic flows 30.

Work queue management API functions 804 provide capabilities for creating and managing a virtual work queue or queues distributed across multiple network devices. The work queue management API functions 804 may enable allocation and configuration of virtual work queue(s) spanning different network devices to facilitate load balancing. For example, a queue _create() function may take inputs such as a context handle, queue size, queue type (e.g., send, receive, or bidirectional), and flags, and return a queue handle. A queue destroy() function may take a queue handle as input and release all resources associated with that queue. A queue _resize() function may allow dynamic adjustment of queue sizes based on changing workloads. A queue_query() function may return current queue statistics such as depth, processing rate, and error counts. These functions enable applications to create and manage virtual work queues similar to the work queues 32-1 and 32-2 shown in Fig. 3, which are used to distribute data chunks 34 across multiple NICs for parallel processing.

A quality indication API function 806 enables specification of quality-of-service indication(s) for virtual work queue(s). In some cases, the quality indication API function 806 may allow setting bandwidth shares among traffic flows associated with the virtual work queues. This functionality enables prioritization and differentiation between traffic flows. For example, a set_qos() function may take inputs such as a queue handle, a bandwidth share parameter K (as described with reference to Fig. 3), priority level, and latency requirements. The function may return a status code indicating success or failure. This function allows applications to specify how bandwidth should be allocated among different traffic flows, similar to how the bandwidth share parameter K is assigned to traffic flows 30-1 and 30-2 described with reference to Fig. 3. The quality indication API function 806 may also support dynamic adjustment of QoS parameters, enabling applications to adapt to changing network conditions or application requirements, similar to how the system described with reference to Fig. 5 adjusts effective bandwidth share parameters when processing difficulties are encountered.

The API 48 includes a post work requests API function 808 for posting remote memory access work requests to virtual work queue(s). In some cases, the work requests posted using the post work requests API function 808 may include local and remote memory addresses, data size, and counter indices for tracking progress. The counter indices may indicate specific counters to be updated as the work requests are processed. For example, a post_work() function may take inputs such as a queue handle, source memory address, destination memory address, data size, operation type (e.g., read, write, atomic), a list of counter indices to update upon completion, and flags. The function may return a work request identifier that can be used to track the request's status. This function enables applications to submit work to be processed by the network devices, similar to how data chunks 34 are added to work queues 32-1 and 32-2 described with reference to Fig. 3 for processing by NICs 16-1 and 16-2. The post work requests API function 808 may also support batch submission of multiple work requests for improved efficiency.

Counter management API functions 810 provide capabilities for creating, destroying, modifying, querying, and waiting on counters. In some cases, the counters managed by the counter management API functions 810 may include local counter(s) and remote counter(s). The local counter(s) may track completion of remote memory access operations by one or more local devices, while the remote counter(s) may track remote memory access operations by one or more remote devices. For example, a counter _create() function may take inputs such as a context handle, counter type (local or remote), initial value, and flags, and return a counter handle. A counter destroy() function may take a counter handle as input and release all resources associated with that counter. A counter_modify() function may allow incrementing, decrementing, or setting counter values. A counter_query() function may return the current value of a counter. A counter_wait() function may block until a counter reaches a specified value or timeout occurs. These functions enable applications to track the progress of data processing across multiple network devices, similar to how the system described with reference to Figs. 3-6 tracks expected progress 38 and actual progress 40 of traffic flows to adjust bandwidth allocation. Per-network interface controller (NIC) counters can be used to implement the progress tracking mechanism described with reference to Fig. 6, where actual progress (block 602) and expected progress (block 604) are compared to dynamically adjust bandwidth shares.

In some implementations, the counter management API functions 810 may include functionality to get per-network interface controller (NIC) counter values (if per NIC counters are maintained) for debugging purposes. This capability may allow detailed monitoring of counter states across individual network devices. For example, a get_nic_counters() function may take inputs such as a NIC identifier and counter type, and return detailed counter statistics for that specific NIC. This function enables applications to monitor the performance of individual NICs in a multi-NIC system.

A network signaling API function 812 provides signaling functionality to notify network devices when work is available in virtual work queue(s) 32. The network signaling API function 812 may enable efficient communication of work availability to the network devices, allowing them to begin processing queued work requests. For example, a signal_work_available() function may take inputs such as a queue handle, a list of NIC identifiers to signal, and flags, and return a status code. This function enables applications to notify specific NICs that new work has been added to a queue. The network signaling API function 812 may also support different signaling mechanisms (e.g., interrupts, polling) based on system capabilities and performance requirements.

In some cases, the API 48 may include additional functions for memory management. These functions may enable registering and deregistering memory regions for use with remote memory access operations. The memory management functions may allow specifying memory areas that can be accessed directly by network devices when processing work requests. For example, a register_memory() function may take inputs such as a context handle, memory address, size, access permissions, and flags, and return a memory region handle. A deregister_memory() function may take a memory region handle as input and release all resources associated with that memory region. These functions enable applications to define memory regions that can be accessed by network devices during remote memory operations, supporting the data processing model described with reference to Figs. 3-6 where NICs access memory to process data chunks.

The various API functions described above work together to provide a comprehensive interface for managing distributed processing of one or more traffic flows across multiple network devices. By leveraging these API functions, systems may implement efficient load balancing, quality of service controls, and coordinated processing of remote memory access operations in multi-device network environments. For example, an application could use context_create() to define a set of NICs, queue _create() to establish virtual work queues, set_qos() to specify bandwidth shares, post_work() to submit data for processing, counter_create() and counter_query() to track progress, and signal_work_available() to notify NICs of new work. This workflow enables the implementation of the multi-NIC load balancing approach described with reference to Figs. 1-6, where multiple NICs process traffic flows concurrently with dynamic bandwidth allocation based on progress tracking.

In some cases, the system may be implemented with different network device configurations. For example, the plurality of network devices may include a combination of network interface controllers (NICs), data processing units (DPUs), or other types of network processing hardware. The specific mix of network device types may be selected based on the particular requirements of the computing environment.

The application programming interface (API) may be extended to support additional functionality in some implementations. For example, the API may include functions to dynamically adjust the bandwidth shares assigned to traffic flows based on real-time network conditions or application requirements. This may allow for more adaptive load balancing across the network devices.

In some cases, the virtual work queue(s) may be implemented using different data structures or memory allocation schemes. For example, the virtual work queue(s) may be organized as linked lists, circular buffers, or other data structures optimized for the specific hardware architecture of the system.

The counter management functions of the API may be expanded in some implementations to support more advanced tracking and synchronization capabilities. For example, the API may include functions to perform atomic operations on counters across multiple network devices, enabling more fine-grained coordination of traffic flow processing.

In some cases, the system may incorporate machine learning algorithms to optimize the distribution of traffic flows across network devices. The API may be extended with functions to provide feedback on network performance metrics, which could be used to train models for predicting optimal load balancing strategies.

The quality-of-service indications supported by the API may be expanded in some implementations to include additional parameters beyond bandwidth shares. For example, the API may allow specification of latency requirements, priority levels, or other traffic characteristics to guide the load balancing decisions.

In some cases, the system may support heterogeneous network environments where network devices have different capabilities or connection speeds. The API may be extended with functions to query and utilize device-specific characteristics when making load balancing decisions.

The remote memory access work requests supported by the API may be expanded in some implementations to include additional operation types beyond basic write operations. For example, the API may support atomic operations, scatter-gather operations, or other advanced memory access patterns.

In some cases, the system may incorporate fault tolerance mechanisms to handle network device failures or disconnections. The API may be extended with functions to detect and respond to device failures, automatically redistributing traffic flows to maintain system performance.

In some implementations, the system may detect network device failures through various mechanisms and respond with appropriate recovery strategies. Network device failure detection may be accomplished through several approaches, such as implementing timeout mechanisms where a counter associated with a specific network device is monitored for updates within a predetermined time period, and if no updates occur after a specified duration, the device may be considered failed. The system may also employ loopback queue pairs that periodically transmit data, where failure of this loopback communication may indicate device failure. Additionally, the system may utilize asynchronous events that can be periodically polled by the host to detect various conditions including network device failures. When a network device failure is detected, the system may respond through various recovery mechanisms, such as removing the failed device from the active context to prevent further work assignment, implementing recovery schemes that query peer connections to determine which data has been successfully received and retransmitting any unreceived data, adding unused backup network devices to the context to maintain processing capacity, or incorporating network devices from other contexts into the current context.

The signaling mechanism used to notify network devices of available work may be implemented using different communication protocols or hardware features in some cases. For example, the system may utilize interrupt-based signaling, shared memory polling, or other low-latency notification methods depending on the specific hardware capabilities.

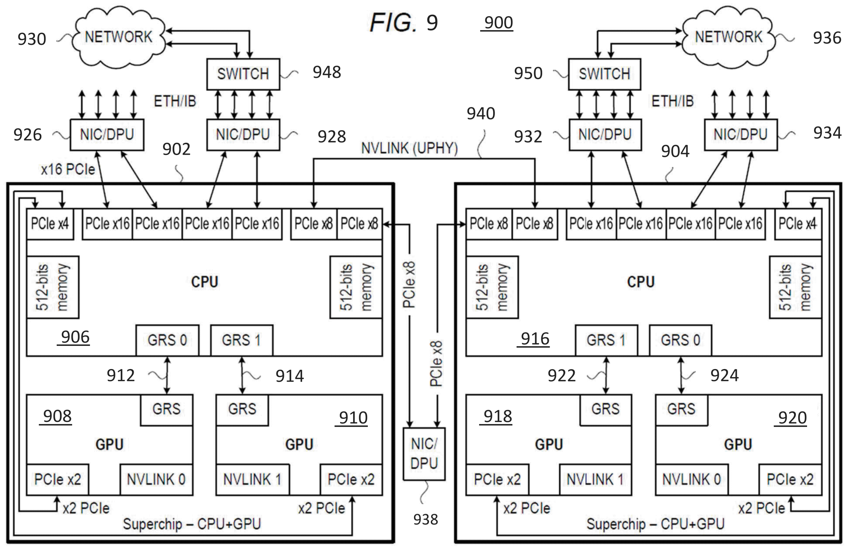

Reference is now made to Fig. 9, which is a block diagram that schematically illustrates a computing system 900, e.g., a data center or a High-Performance Computing (HPC) cluster, in accordance with an embodiment of the present disclosure.

System 900 comprises a plurality of subsystems, e.g., multiple processing devices coupled to each other, multiple network devices, and multiple networks, according to at least one embodiment. Computing system 900 is designed with multiple integrated circuits (referred to as processing devices), where each integrated circuit can include one or more CPUs and GPUs, forming a powerful and flexible architecture.

The various processing devices are interconnected via an NVLink or other high-speed interconnect, enabling high-speed communication between the subsystems, and are also connected through a NIC or DPU to ensure efficient data transfer across computing system 900 and to one or more external networks 930, 936. In the present example, system 900 comprises a packet switch 948 that connects NIC/DPU 928 to network 930, and a packet switch 950 that connects NIC/DPU 932 to network 936.

The coupling of processing devices through NVLink allows for seamless data exchange and parallel processing, enhancing overall computational performance. The processing devices are connected to multiple networks through one or more network interface cards (NICs) or DPUs, enabling the system to handle complex, multi-network tasks with high bandwidth and low latency. This configuration is highly suitable for demanding applications that require significant processing power, such as artificial intelligence (AI), machine learning (ML), and data-intensive computing, while ensuring robust connectivity and scalability across various networked environments. The integrated circuits of the computing system 900 can include one or more CPUs and one or more GPUs.

Fig. 9 also demonstrates an example architecture of a multi-GPU architecture. As illustrated in the figure, computing system 900 includes a processing device 902 with a multi-GPU architecture. In particular, processing device 902 may be a system-on-chip and includes multiple subsystems such as a CPU 906, a GPU 908, and a GPU 910. CPU 906 can be coupled to GPU 908 via a die-to-die (D2D) or chip-to-chip (C2C) interconnect 912, such as a Ground-Referenced Signaling interconnect (GRS interconnect). CPU 906 can be coupled to GPU 910 via a D2D or C2C interconnect 914. CPU 906 can also couple to GPU 908 and GPU 910 via PCIe interconnects.

CPU 906 can be coupled to one or more NICs or DPUs, which are coupled to one or more networks. For example, as illustrated in Fig. 9, CPU 906 is coupled to a first NIC/DPU 926, which is coupled to a network 930. CPU 906 is also coupled to a second NIC/DPU 928, which is coupled to network 930 via switch 948. NIC/DPU 926 and NIC/DPU 928 can be coupled to network 930 over Ethernet (ETH), NVLINK or InfiniBand (IB) connections, for example.

Computing system 900 also includes a processing device 904 with a multi-GPU architecture. In particular, processing device 904 includes multiple subsystems including a CPU 916, a GPU 918, and a GPU 920. CPU 916 can be coupled to GPU 918 via a D2D or C2C interconnect 922. CPU 916 can be coupled to GPU 920 via a D2D or C2C interconnect 924. CPU 916 can also couple to GPU 918 and GPU 920 via PCIe interconnects. CPU 916 can be coupled to one or more NICs or DPUs, which are coupled to one or more networks. For example, as illustrated in Fig. 9, CPU 916 is coupled to a first NIC/DPU 932, which is coupled to a network 936. CPU 916 is also coupled to a second NIC/DPU 934, which is coupled to network 936 via switch 950. NIC/DPU 932 and NIC/DPU 934 can be coupled to network 936 over Ethernet (ETH), NVLINK or InfiniBand (IB) connections.

In at least one embodiment, processing device 902 and processing device 904 can communicate with each other via a NIC/DPU 938, such as over PCIe interconnects. Processing device 902 and processing device 904 can also communicate with each other over a high-bandwidth communication interconnect 940, such as an NVLink interconnect or other high-speed interconnects. The packet switches in Fig. 9 may comprise, for example, Nvidia Quantum-2 switches. The NICs/DPUs in the figure may comprise, for example, Nvidia Bluefield DPUs.

The processing unit may be any suitable device, such as: an accelerator device; a processing device including a central processing unit (CPU) and/or a graphics processing unit (GPU); a host device connected to one or more peripheral devices; a peripheral device connected to another peripheral device and/or one or more host devices; a network device, e.g., a network interface controller (NIC) device, a data processing unit (DPU) or smart NIC including a NIC and one or more processing cores, or a network switch. One or more of the processing steps described herein may be performed by a CPU, GPU, DPU, NIC, or any suitable combination thereof.

The NIC may include any of the following: an Ethernet Port (RJ45 Connector), which is the physical interface where the network cable (usually an Ethernet cable) connects to the NIC and is used for wired network connections; packet processing hardware or circuitry, which is responsible for handling network communication and processes incoming and outgoing data packets and manages the network interface functions; a memory (such as RAM or ROM) to store temporary data, such as network packet buffers, configuration settings, and firmware, and helps in speeding up data transfer and processing; firmware, which is software programmed into the NIC's memory and controls the hardware operations and may perform firmware updates to improve performance or add new features to the NIC; LED Indicators that provide visual indicators of network status, common indicators including power status, network activity, and link speed; a bus Interface (e.g., PCI or PCIe) to connect the NIC to the host computer's motherboard; a processor to handle network processing tasks as well as other processing tasks to offload work from the main CPU of the host device and improve network performance; a heat sink or cooling mechanism (e.g., for high-performance NICs), especially those used in servers, to prevent overheating; power management circuitry to ensure the NIC receives the correct amount of power and manages power consumption efficiently; and/or connector pins and circuitry including internal connections and pathways that route signals between the NIC's components.

The packet processing hardware or circuitry is the central component of the NIC and handles network communications. It may include several key components that work together to manage and process network data, such as any one or more of the following: MAC (Media Access Control) Layer, which is responsible for handling the data link layer of the OSI model and manages how data packets are formatted, addressed, and transmitted over the network; MAC address register, which stores the unique hardware address (MAC address) of the NIC; a frame buffer that temporarily holds data frames as they are being processed; a PHY (Physical Layer) Interface that interfaces with the physical medium (such as Ethernet cables) and is responsible for the actual transmission and reception of data bits over the network; a transceiver that converts data between the digital signals used by the MAC layer and the analog signals used for transmission over the network medium; DMA (Direct Memory Access) Controller that manages data transfers between the NIC and the computer's memory without involving the CPU and helps to offload processing tasks from the CPU and improve data transfer efficiency; a packet Processing Engine that handles the encapsulation and decapsulation of network packets, and processes incoming and outgoing packets, managing tasks like error checking and packet filtering; buffer management, which includes memory areas for storing packets temporarily, such as transmit buffers to store packets that are being sent from the computer to the network, receive buffers to store packets received from the network before they are processed by the system; an interrupt controller that manages and generates interrupts to notify the CPU of events such as packet reception or transmission completion and helps in efficient handling of network events; a clock generator, which provides timing signals for the various components of the NIC to synchronize their operations; a power management unit to regulate power consumption and manages power-saving features of the NIC chip to improve energy efficiency; error handling and correction logic, which detects and corrects errors in data transmission and reception, and may include features for error-checking protocols like CRC (Cyclic Redundancy Check); configuration registers that store configuration settings and parameters that control the NIC's operation, such as speed settings, interrupt configurations, and buffer sizes; firmware/ROM that contains the embedded software that controls the NIC's operations and manages network protocols.

In practice, some or all of these functions may be combined in a single physical component or, alternatively, implemented using multiple physical components. These physical components may comprise hard-wired or programmable devices, or a combination of the two. In some embodiments, at least some of the functions of the processing circuitry may be carried out by a programmable processor under the control of suitable software. This software may be downloaded to a device in electronic form, over a network, for example. Alternatively, or additionally, the software may be stored in tangible, non-transitory computer-readable storage media, such as optical, magnetic, or electronic memory.

The flowchart and block diagrams in the figures illustrate the architecture, functionality, and operation of possible implementations of systems, methods and computer program products according to various examples of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, block diagrams and/or flowchart illustration, and combinations of blocks in the block diagrams and/or flowchart illustration, can be implemented by special purpose hardware-based systems that perform the specified functions or acts, or combinations of special purpose hardware and computer instructions. The descriptions of the various examples of the present disclosure have been presented for purposes of illustration, but are not intended to be exhaustive or limited to the examples disclosed. Many modifications and variations will be apparent to those of ordinary skill in the art without departing from the scope and spirit of the described examples.

As used herein, the singular form "a", "an" and "the" include plural references unless the context clearly dictates otherwise.

Various features of the disclosure which are, for clarity, described in the contexts of separate embodiments may also be provided in combination in a single embodiment. Conversely, various features of the disclosure which are, for brevity, described in the context of a single embodiment may also be provided separately or in any suitable sub-combination.

The embodiments described above are cited by way of example, and the present disclosure is not limited by what has been particularly shown and described hereinabove. Rather the scope of the disclosure includes both combinations and sub-combinations of the various features described hereinabove, as well as variations and modifications thereof which would occur to persons skilled in the art upon reading the foregoing description and which are not disclosed in the prior art.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A processor, comprising:
circuitry to implement an application programming interface (API) to manage processing of at least one traffic flow across a plurality of network devices coupled to at least one processing element generating the at least one traffic flow; and
a memory to store data used by the API associated with managing the processing of the at least one traffic flow.

2. The processor according to claim 1, wherein the API includes functions to create and manage contexts defining sets of network devices over which load balancing occurs.

3. The processor according to claim 1 or 2, wherein the API includes functions to create and manage at least one virtual work queue distributed across the plurality of network devices.

4. The processor according to claim 3, wherein the API includes a function to specify at least one quality-of-service indication of the at least one virtual work queue.

5. The processor according to claim 4, wherein the at least one quality-of-service indication includes bandwidth shares among traffic flows associated with the at least one virtual work queue.

6. The processor according to any of claims 3-5, wherein the API includes a function to post remote memory access work requests to the at least one virtual work queue.

7. The processor according to claim 6, wherein the work requests include any one or more of the following: local and remote memory addresses; data size; and counter indices for tracking progress.

8. The processor according to claim 7, wherein, the counter indices indicate the counters to be updated.

9. The processor according to any of claims 1-8, wherein the API includes functions to create, destroy, modify, query, and wait on counters.

10. The processor according to claim 9, wherein the counters include at least one local counter and at least one remote counter, wherein the at least one local counter is to track completion of remote memory access operations by at least one local device and the at least one remote counter is to track completion of remote memory access operations by at least one remote device.

11. The processor according to any of claims 1-10, wherein the API includes a function to signal the network devices that work is available in at least one virtual work queue.

12. The processor according to any of claims 1-11, wherein the at least one processing element comprises at least one of a central processing unit (CPU) or a graphics processing unit (GPU) or a data processing unit (DPU).

13. A system, comprising:
at least one processing element to:
generate at least one traffic flow; and
execute at least one instance of an application programming interface (API) to manage processing of the at least one traffic flow across a plurality of network devices;
a plurality of network devices coupled to the at least one processing element; and
at least one memory associated with the at least one processing element to store at least one virtual work queue and data used by the API associated with managing the processing of the at least one traffic flow across the plurality of network devices.

14. The system according to claim 13, wherein the API includes functions to create and manage contexts defining sets of network devices over which load balancing occurs.

15. A method, comprising:
implementing an application programming interface (API) to manage processing of at least one traffic flow across a plurality of network devices coupled to at least one processing element generating the at least one traffic flow; and
storing data used by the API associated with managing the processing of the at least one traffic flow.
